# EUROPEAN PATENT APPLICATION

(11) **EP 4 258 739 A1**
(43) Date of publication of application: **11.10.2023**
(21) Application number: 20966396.2
(22) Date of filing: 23.12.2020
(51) Int. Cl.: H04W 36/00

(54) **CELL HANDOVER METHOD AND APPARATUS**

(71) Applicant: Huawei Technologies Co., Ltd., Longgang District Shenzhen, Guangdong 518129 (CN)
(72) Inventor: YUAN, Shitong, Shenzhen, Guangdong 518129 (CN); GUAN, Peng, Shenzhen, Guangdong 518129 (CN); FAN, Bo, Shenzhen, Guangdong 518129 (CN); ZHANG, Xi, Shenzhen, Guangdong 518129 (CN); CHEN, Lei, Shenzhen, Guangdong 518129 (CN)
(74) Representative: Huawei European IPR
(86) International application number: PCT/CN2020/138687
(87) International publication number: WO 2022/133821

(57) **Abstract**

This application discloses a cell handover method and an apparatus. The method includes: receiving indication information from a source cell, where the indication information indicates to activate a first transmission configuration indicator TCI state; initiating random access to a target cell according to the indication information; and if first response information returned by the target cell is received, returning second response information to the source cell, where the second response information indicates that the first TCI state is successfully activated. Implementing cell handover through beam switch can reduce a delay of a terminal device during the cell handover. The terminal device returns the second response information to the source cell only after receiving the first response information returned by the target cell. An improved feedback mechanism can improve reliability of the terminal device during the beam switch-based cell handover.

## Description

### TECHNICAL FIELD

This application relates to the field of communication technologies, and in particular, to a cell handover method and an apparatus.

### BACKGROUND

A beamforming (beamforming) technology can concentrate signals in one direction for transmission, to compensate for path loss. A network device and a terminal device communicate with each other through a beam. As the terminal device moves or the like, handover between cells may occur on the terminal device. A layer 3 (layer 3, L3) control mechanism, that is, a radio resource control (radio resource control, RRC) protocol layer control mechanism, may be used when cell handover occurs because the terminal device moves between the cells. Specifically, a source cell of the terminal device configures a reference signal measurement configuration of a neighboring cell for the terminal device. A network device of the neighboring cell sends a reference signal for each beam through beam scanning. The terminal device measures reference signals of the neighboring cell, selects a proper reference signal, and notifies the network device of the neighboring cell of the selected reference signal during initial access to the neighboring cell, so that the network device of the neighboring cell can learn of a beam corresponding to the reference signal selected by the terminal device.

However, a delay of a current cell handover method is large, and how to reduce the delay of cell handover is a problem that needs to be resolved.

### SUMMARY

This application provides a cell handover method and an apparatus, to reduce a delay of a terminal device during cell handover.

According to a first aspect, a cell handover method is provided. The method may be performed by a terminal device, or may be performed by a component (such as a processor, a chip, or a chip system) of the terminal device. The method may be implemented by the following steps: receiving indication information from a source cell, where the indication information indicates to activate a first transmission configuration indicator (transmission configuration indicator, TCI) state; initiating random access to a target cell according to the indication information; and if first response information returned by the target cell is received, returning second response information to the source cell, where the second response information indicates that the first TCI state is successfully activated. Implementing cell handover through beam switch can reduce a delay of the terminal device during the cell handover. The terminal device returns the second response information to the source cell only after receiving the first response information returned by the target cell. An improved feedback mechanism can improve reliability of the terminal device during the beam switch-based cell handover.

In a possible design, the first TCI state indicates a first reference signal; and the initiating random access to a target cell according to the indication information may be implemented in the following manner: initiating the random access to the target cell based on a first random access resource associated with the first reference signal. The target cell learns of an association relationship between a reference signal and a random access resource. When receiving a random access request initiated by the terminal device based on the first random access resource, the target cell may determine a target beam that the terminal device wants to access.

In a possible design, a plurality of reference signals of the target cell are associated with a plurality of random access resources, and the first reference signal is one of the plurality of reference signals.

In a possible design, the first TCI state indicates the first reference signal; and the initiating random access to a target cell according to the indication information may be implemented in the following manner: sending a scheduling request (scheduling request, SR) or sending a MAC-CE defined in a protocol to the target cell based on a first uplink control channel resource associated with the first reference signal. The target cell learns of an association relationship between a reference signal and an uplink control channel resource. When receiving the scheduling request (SR) or the MAC-CE defined in the protocol initiated by the terminal device based on the first uplink control channel resource, the target cell may determine a target beam that the terminal device wants to access.

Optionally, a plurality of reference signals of the target cell are associated with a plurality of uplink control channel resources, and the first reference signal is one of the plurality of reference signals.

The source cell may configure the association relationship between the reference signal and the random access resource for the terminal device in advance, and the terminal device may obtain the association relationship from the source cell. The association relationship may be obtained by the source cell by using a received system message of the target cell. The terminal device determines the random access resource based on a configuration of the random access resource of the target cell, and initiates the random access to the target cell. Alternatively, after receiving the indication information from the source cell, the terminal device may attempt to receive system information or a broadcast message in the target cell, obtain the configuration of the random access resource, and initiate the random access in the target cell.

In a possible design, the first response information includes response information used to respond to the random access. For example, the first response information may be a random access response or other information used to respond to the random access. The terminal device considers that the random access succeeds only after receiving the response information that is used to respond to the random access that is returned by the target cell, and may further return the second response information to the source cell. The source cell considers that beam switch succeeds or considers that activation of the first TCI succeeds only after receiving the second response information. In this way, cell handover reliability can be improved.

In a possible design, the terminal device may alternatively attempt to send uplink data or an uplink signal in the target cell after receiving the indication information from the source cell, where the uplink data includes data on a PUSCH and data on a PUCCH, and the uplink signal includes an SRS sounding reference signal. Optionally, the first response information may be response information used to respond to the uplink signal or the uplink data.

In a possible design, the first TCI state indicates the first reference signal, and the method further includes the following steps: after the random access is initiated to the target cell, if a beam failure occurs, performing beam failure recovery based on a candidate beam configuration of the first reference signal. When beam switch-based cell handover fails, the terminal device can quickly attempt the beam failure recovery in the target cell by using the candidate beam configuration, so that reliability of the terminal device during beam switch-based cell handover can be improved.

In a possible design, the first response information includes response information used to respond to the beam failure recovery. For example, the first response information may be a beam failure recovery request response, or other information that may be used to respond to the beam failure recovery. After the terminal device performs the beam switch-based cell handover, a beam switch failure may occur. After receiving the response information used to respond to the beam failure recovery, the terminal device returns, to the source cell, the second response message that indicates that activation of the first TCI state succeeds, cell handover succeeds, or beam switch succeeds. In this way, reliability and robustness of successful cell handover can be further ensured.

In a possible design, the performing beam failure recovery based on a candidate beam configuration of the first reference signal may be implemented in the following manner: measuring one or more reference signals in the candidate beam configuration of the first reference signal; selecting a second reference signal in the candidate beam configuration according to a measurement result; and sending a beam failure recovery request to the target cell based on the uplink resource associated with the second reference signal.

In a possible design, the method further includes: receiving configuration information from the source cell, where the configuration information includes a downlink resource used to receive the beam failure recovery request response; and receiving the beam failure recovery request response from the target cell based on the downlink resource. The configuration information of the downlink resource is received, so that the beam failure recovery request response of the target cell can be received on the downlink resource, thereby completing the beam failure recovery.

In a possible design, if the first response information returned by the target cell is not received, communication is performed with the source cell based on a second TCI state used before the first TCI state is successfully activated. For example, a PDCCH from the source cell may be received based on a QCL relationship indicated by the second TCI state. When the cell handover fails, the terminal device remains in the source cell to continue communication, so that it can be ensured that the terminal device does not return to an RRC initial state because the terminal device is disconnected from the network due to a radio link failure, thereby ensuring normal communication of the terminal device.

According to a second aspect, a cell handover method is provided. The method may be performed by a terminal device, or may be performed by a component (such as a processor, a chip, or a chip system) of the terminal device. The method may be implemented by the following steps: The terminal device receives indication information from a source cell, where the indication information indicates to activate a first TCI state, and initiates random access to a target cell according to the indication information. If a beam failure occurs, the terminal device performs beam failure recovery based on a candidate beam configuration of a first reference signal, where the first TCI state indicates the first reference signal, and if response information that is used to respond to the beam failure recovery and that is returned by the target cell is received, returns second response information to the source cell. The source cell receives the second response information from the terminal device, where the second response information indicates that the first TCI state is successfully activated. When beam switch-based cell handover fails, the terminal device can quickly attempt the beam failure recovery in the target cell by using the candidate beam configuration, so that reliability of the terminal device during the beam switch-based cell handover can be improved.

In a possible design, the first TCI state indicates the first reference signal; and the initiating random access to a target cell according to the indication information may be implemented in the following manner: initiating the random access to the target cell based on a first random access resource associated with the first reference signal. The target cell learns of an association relationship between a reference signal and a random access resource. When receiving a random access request initiated by the terminal device based on the first random access resource, the target cell may determine a target beam that the terminal device wants to access.

In a possible design, a plurality of reference signals of the target cell are associated with a plurality of random access resources, and the first reference signal is one of the plurality of reference signals.

In a possible design, the first TCI state indicates the first reference signal; and the initiating random access to the target cell according to the indication information may be implemented in the following manner: sending a scheduling request (scheduling request, SR) or sending a MAC-CE defined in a protocol to the target cell based on a first uplink control channel resource associated with the first reference signal. The target cell learns of an association relationship between a reference signal and an uplink control channel resource. When receiving the scheduling request (SR) or the MAC-CE defined in the protocol initiated by the terminal device based on the first uplink control channel resource, the target cell may determine a target beam that the terminal device wants to access.

Optionally, a plurality of reference signals of the target cell are associated with a plurality of uplink control channel resources, and the first reference signal is one of the plurality of reference signals.

The source cell may configure the association relationship between the reference signal and the random access resource for the terminal device in advance, and the terminal device may obtain the association relationship from the source cell. The association relationship may be obtained by the source cell by using a received system message of the target cell. The terminal device determines the random access resource based on a configuration of the random access resource of the target cell, and initiates the random access to the target cell. Alternatively, after receiving the indication information from the source cell, the terminal device may attempt to receive system information or a broadcast message in the target cell, obtain the configuration of the random access resource, and initiate the random access in the target cell.

In a possible design, the terminal device may alternatively attempt to send uplink data or an uplink signal in the target cell after receiving the indication information from the source cell, where the uplink data includes data on a PUSCH and data on a PUCCH, and the uplink signal includes an SRS sounding reference signal. Optionally, the first response information may be response information used to respond to the uplink signal or the uplink data.

In a possible design, the performing beam failure recovery based on a candidate beam configuration of the first reference signal may be implemented in the following manner: measuring one or more reference signals in the candidate beam configuration of the first reference signal; selecting a second reference signal in the candidate beam configuration according to a measurement result; and sending a beam failure recovery request to the target cell based on the uplink resource associated with the second reference signal.

In a possible design, the method further includes: receiving configuration information from the source cell, where the configuration information includes a downlink resource used to receive the beam failure recovery request response; and receiving the beam failure recovery request response from the target cell based on the downlink resource. The configuration information of the downlink resource is received, so that the beam failure recovery request response of the target cell can be received on the downlink resource, thereby completing the beam failure recovery.

In a possible design, if the first response information returned by the target cell is not received, communicate with the source cell based on a second TCI state used before the first TCI state is successfully activated. For example, a PDCCH from the source cell may be received based on a QCL relationship indicated by the second TCI state. When the cell handover fails, the terminal device remains in the source cell to continue communication, so that it can be ensured that the terminal device does not return to an RRC initial state because the terminal device is disconnected from the network due to a radio link failure, thereby ensuring normal communication of the terminal device.

According to a third aspect, a cell handover method is provided. The method may be performed by a source cell, or may be performed by a component (such as a processor, a chip, or a chip system) of the source cell. An operation performed by the source cell may be performed by a network device in which the source cell is located. The method may be implemented by the following steps: sending indication information to a terminal device based on a quasi-colocation QCL relationship indicated by a first TCI state, where the indication information indicates to activate a second TCI state, and the indication information is used by the terminal device to initiate random access to a target cell; and receiving an acknowledgement from the terminal device, where the acknowledgement indicates that the second TCI state is successfully activated. The indication information indicates to activate the second TCI state of the target cell, so that the activation of the second TCI state is usually based on beam switch, and cell handover can be implemented through the beam switch, thereby reducing a cell handover delay.

Generally, the acknowledgement may be sent by using physical layer signaling, or may be sent by using MAC layer signaling. A delay of the physical layer and the MAC layer is lower than that of a layer 3, that is, an RRC layer. Therefore, the delay of a cell handover can be reduced.

In a possible design, if a negative acknowledgement is received from the terminal device, communication is performed with the terminal device by using the QCL relationship indicated by the first TCI state. The negative acknowledgement indicates that the cell handover fails. Communication with the terminal device is continued when the cell handover fails, so that it can be ensured that the terminal device does not return to an RRC initial state because the terminal device is disconnected from a network due to a radio link failure, thereby ensuring normal communication of the terminal device.

In a possible design, configuration information is requested from the target cell, where the configuration information includes a downlink resource used by the terminal device to receive a beam failure recovery request response; and the configuration information is received from the target cell. By requesting the configuration information from the target cell, the downlink resource used to receive the beam failure recovery request response may be indicated to the terminal device, so that the terminal device receives the beam failure recovery request response from the target cell on the downlink resource.

According to a fourth aspect, a communication apparatus is provided. The communication apparatus may be a terminal device, or may be an apparatus located in the terminal device (for example, a chip, a chip system, or a circuit), or an apparatus that can be used in matching with the terminal device. In a design, the apparatus may include modules that are in a one-to-one correspondence with the method/operation/step/action described in the first aspect. The modules may be implemented by a hardware circuit, software, or a combination of the hardware circuit and software. In a design, the apparatus may include a processing module and a communication module. The processing module is configured to invoke the communication module to perform a receiving and/or sending function. The communication module may also be referred to as a transceiver module, and may further include a sending module and a receiving module. Specifically, the sending module is configured to implement the sending operation in the foregoing method, and the receiving module is configured to implement the receiving operation in the foregoing method. Other operations are implemented by the processing module. For example, the communication module is configured to receive indication information from a source cell, where the indication information indicates to activate a first TCI state. The processing module is configured to initiate random access to a target cell according to the indication information, and is configured to: if it is determined that the communication module receives first response information returned by the target cell, return second response information to the source cell by using the communication module, where the second response information indicates that the first TCI state is successfully activated. The terminal device returns the second response information to the source cell only after receiving the first response information returned by the target cell. An improved feedback mechanism can improve reliability of the terminal device during the beam switch-based cell handover.

In a possible design, the first TCI state indicates the first reference signal; and when initiating the random access to the target cell according to the indication information, the processing module is specifically configured to initiate the random access to the target cell based on a first random access resource associated with the first reference signal. The target cell learns of an association relationship between a reference signal and a random access resource. When receiving a random access request initiated by the terminal device based on the first random access resource, the target cell may determine a target beam that the terminal device wants to access.

In a possible design, a plurality of reference signals of the target cell are associated with a plurality of random access resources, and the first reference signal is one of the plurality of reference signals.

In a possible design, the first TCI state indicates the first reference signal; and when initiating the random access to the target cell according to the indication information, the processing module is specifically configured to send a scheduling request (scheduling request, SR) or send a MAC-CE defined in a protocol to the target cell based on a first uplink control channel resource associated with the first reference signal. The target cell learns of an association relationship between a reference signal and an uplink control channel resource. When receiving the scheduling request (SR) or the MAC-CE defined in the protocol initiated by the terminal device based on the first uplink control channel resource, the target cell may determine a target beam that the terminal device wants to access.

Optionally, a plurality of reference signals of the target cell are associated with a plurality of uplink control channel resources, and the first reference signal is one of the plurality of reference signals.

The source cell may configure the association relationship between the reference signal and the random access resource for the terminal device in advance, and the processing module is further configured to obtain the association relationship from the source cell. The association relationship may be obtained by the source cell by using a received system message of the target cell. The processing module is configured to determine the random access resource based on a configuration of the random access resource of the target cell, and initiate the random access to the target cell. Alternatively, after receiving the indication information from the source cell by using the communication module, the processing module may attempt to receive system information or a broadcast message in the target cell, obtain the configuration of the random access resource, and initiate the random access in the target cell.

In a possible design, the terminal device may alternatively attempt to send uplink data or an uplink signal in the target cell after receiving the indication information from the source cell, where the uplink data includes data on a PUSCH and data on a PUCCH, and the uplink signal includes an SRS sounding reference signal. Optionally, the first response information may be response information used to respond to the uplink signal or the uplink data.

In a possible design, the first response information includes response information used to respond to the random access. For example, the first response information may be a random access response or other information that may be used to respond to the random access. The terminal device considers that the random access succeeds only after receiving the response information that is used to respond to the random access that is returned by the target cell, and may further return the second response information to the source cell. The source cell considers that beam switch succeeds or considers that activation of the first TCI succeeds only after receiving the second response information. In this way, cell handover reliability can be improved.

In a possible design, the first TCI state indicates the first reference signal, and the processing module is further configured to: after initiating the random access to the target cell, if a beam failure occurs, perform beam failure recovery based on a candidate beam configuration of the first reference signal. When beam switch-based cell handover fails, the terminal device can quickly attempt the beam failure recovery in the target cell by using the candidate beam configuration, so that reliability of the terminal device during the beam switch-based cell handover can be improved.

In a possible design, the first response information includes response information used to respond to the beam failure recovery. For example, the first response information may be a beam failure recovery request response, or other information used to respond to the beam failure recovery. After the terminal device performs the beam switch-based cell handover, a beam switch failure may occur. After receiving the response information used to respond to the beam failure recovery, the terminal device returns, to the source cell, the second response message that indicates that activation of the first TCI state succeeds, cell handover succeeds, or beam switch succeeds. In this way, reliability and robustness of successful cell handover can be further ensured.

In a possible design, when performing the beam failure recovery based on the candidate beam configuration of the first reference signal, the processing module is specifically configured to: measure one or more reference signals in the candidate beam configuration of the first reference signal; select a second reference signal in the candidate beam configuration according to a measurement result; and send a beam failure recovery request to the target cell based on the uplink resource associated with the second reference signal.

In a possible design, the communication module is further configured to: receive configuration information from the source cell, where the configuration information includes a downlink resource used to receive the beam failure recovery request response; and the processing module is further configured to receive the beam failure recovery request response from the target cell based on the downlink resource. The configuration information of the downlink resource is received, so that the beam failure recovery request response of the target cell can be received on the downlink resource, thereby completing the beam failure recovery.

In a possible design, the processing module is further configured to: if the first response information returned by the target cell is not received, communicate with the source cell based on a second TCI state used before the first TCI state is successfully activated. For example, a PDCCH from the source cell may be received based on a QCL relationship indicated by the second TCI state. When the cell handover fails, the terminal device remains in the source cell to continue communication, so that it can be ensured that the terminal device does not return to an RRC initial state because the terminal device is disconnected from the network due to a radio link failure, thereby ensuring normal communication of the terminal device. Alternatively, the processing module is further configured to: if the first response information returned by the target cell is not received, communicate with the source cell based on the second TCI state used before the first TCI state is successfully activated. It may be understood that, if the processing module determines that the first response information returned by the target cell is not received, the processing module communicates with the source cell based on the second TCI state used before the first TCI state is successfully activated.

According to a fifth aspect, a communication apparatus is provided. The communication apparatus may be a terminal device, or may be an apparatus located in the terminal device (for example, a chip, a chip system, or a circuit), or an apparatus that can be used in matching with the terminal device. In a design, the apparatus may include modules that are in a one-to-one correspondence with the method/operation/step/action described in the second aspect. The modules may be implemented by a hardware circuit, software, or a combination of the hardware circuit and software. In a design, the apparatus may include a processing module and a communication module. The processing module is configured to invoke the communication module to perform a receiving and/or sending function. The communication module may also be referred to as a transceiver module, and may further include a sending module and a receiving module. Specifically, the sending module is configured to implement the sending operation in the foregoing method, and the receiving module is configured to implement the receiving operation in the foregoing method. Other operations are implemented by the processing module. For example, the communication module is configured to receive indication information from a source cell, where the indication information indicates to activate a first TCI state. The processing module is configured to: initiate random access to a target cell according to the indication information, and if a beam failure occurs, perform beam failure recovery based on a candidate beam configuration of a first reference signal, where the first TCI state indicates the first reference signal; and if response information that is used to respond to the beam failure recovery and that is returned by the target cell is received, return second response information to the source cell. The source cell receives the second response information from the terminal device, where the second response information indicates that the first TCI state is successfully activated. When beam switch-based cell handover fails, the terminal device can quickly attempt the beam failure recovery in the target cell by using the candidate beam configuration, so that reliability of the terminal device during beam switch-based cell handover can be improved.

In a possible design, the first TCI state indicates the first reference signal; and when initiating the random access to the target cell according to the indication information, the processing module is specifically configured to initiate the random access to the target cell based on a first random access resource associated with the first reference signal. The target cell learns of an association relationship between the reference signal and the random access resource. When receiving a random access request initiated by the terminal device based on the first random access resource, the target cell may determine a target beam that the terminal device wants to access.

In a possible design, a plurality of reference signals of the target cell are associated with a plurality of random access resources, and the first reference signal is one of the plurality of reference signals.

In a possible design, the first TCI state indicates the first reference signal; and when initiating the random access to the target cell according to the indication information, the processing module is specifically configured to send a scheduling request (scheduling request, SR) or send a MAC-CE defined in a protocol to the target cell based on a first uplink control channel resource associated with the first reference signal. The target cell learns of an association relationship between a reference signal and an uplink control channel resource. When receiving the scheduling request (SR) or the MAC-CE defined in the protocol initiated by the terminal device based on the first uplink control channel resource, the target cell may determine a target beam that the terminal device wants to access.

Optionally, a plurality of reference signals of the target cell are associated with a plurality of uplink control channel resources, and the first reference signal is one of the plurality of reference signals.

The source cell may configure the association relationship between the reference signal and the random access resource for the terminal device in advance, and the processing module is further configured to obtain the association relationship from the source cell. The association relationship may be obtained by the source cell by using a received system message of the target cell. The processing module is configured to determine the random access resource based on a configuration of the random access resource of the target cell, and initiate the random access to the target cell. Alternatively, after receiving the indication information from the source cell by using the communication module, the processing module may attempt to receive system information or a broadcast message in the target cell, obtain the configuration of a random access resource, and initiate the random access in the target cell.

In a possible design, the terminal device may alternatively attempt to send uplink data or an uplink signal in the target cell after receiving the indication information from the source cell, where the uplink data includes data on a PUSCH and data on a PUCCH, and the uplink signal includes an SRS sounding reference signal. Optionally, the first response information may be response information used to respond to the uplink signal or the uplink data.

In a possible design, when performing the beam failure recovery based on the candidate beam configuration of the first reference signal, the processing module is specifically configured to: measure one or more reference signals in the candidate beam configuration of the first reference signal; select a second reference signal in the candidate beam configuration according to a measurement result; and send a beam failure recovery request to the target cell based on the uplink resource associated with the second reference signal.

In a possible design, the communication module is further configured to receive configuration information from the source cell, where the configuration information includes a downlink resource used to receive a beam failure recovery request response. The processing module is further configured to receive the beam failure recovery request response from the target cell by using the communication module based on the downlink resource. The configuration information of the downlink resource is received, so that the beam failure recovery request response of the target cell can be received on the downlink resource, thereby completing the beam failure recovery.

In a possible design, the communication module is further configured to: if the first response information returned by the target cell is not received, communicate with the source cell based on a second TCI state used before the first TCI state is successfully activated. For example, a PDCCH from the source cell may be received based on a QCL relationship indicated by the second TCI state. When the cell handover fails, the terminal device remains in the source cell to continue communication, so that it can be ensured that the terminal device does not return to an RRC initial state because the terminal device is disconnected from the network due to a radio link failure, thereby ensuring normal communication of the terminal device. Alternatively, the processing module is further configured to: if the first response information returned by the target cell is not received, communicate with the source cell based on the second TCI state used before the first TCI state is successfully activated. It may be understood that, if the processing module is configured to determine that the first response information returned by the target cell is not received, the processing module communicates with the source cell based on the second TCI state used before the first TCI state is successfully activated.

According to a sixth aspect, a communication apparatus is provided. The communication apparatus may be a source cell, or may be an apparatus located in the source cell (for example, a chip, a chip system, or a circuit), or an apparatus that can be used in matching with the source cell. An operation performed by the source cell may be performed by a network device in which the source cell is located. In a design, the apparatus may include modules that are in a one-to-one correspondence with the method/operation/step/action described in the third aspect. The modules may be implemented by a hardware circuit, software, or a combination of the hardware circuit and software. In a design, the apparatus may include a processing module and a communication module. The processing module is configured to invoke the communication module to perform a receiving and/or sending function. The communication module may also be referred to as a transceiver module, and may further include a sending module and a receiving module. Specifically, the sending module is configured to implement the sending operation in the foregoing method, and the receiving module is configured to implement the receiving operation in the foregoing method. Other operations are implemented by the processing module. For example, the processing module is configured to send, by using the communication module, indication information to the terminal device based on a quasi-colocation QCL relationship indicated by a first TCI state, where the indication information indicates to activate a second TCI state, and the indication information is used by the terminal device to initiate random access to a target cell. The communication module is further configured to receive an acknowledgement from the terminal device, where the acknowledgement indicates that the second TCI state is successfully activated. The indication information indicates to activate the second TCI state of the target cell, so that the activation of the second TCI state is usually based on beam switch, and cell handover can be implemented through the beam switch, thereby reducing a cell handover delay.

Generally, the acknowledgement may be sent by using physical layer signaling, or may be sent by using MAC layer signaling. A delay of the physical layer and the MAC layer is lower than that of a layer 3, that is, an RRC layer. Therefore, the delay of a cell handover can be reduced.

In a possible design, the processing module is configured to: if a negative acknowledgement is received from the terminal device, communicate with the terminal device by using the QCL relationship indicated by the first TCI state. The negative acknowledgement indicates that the cell handover fails. Communication with the terminal device is continued when the cell handover fails, so that it can be ensured that the terminal device does not return to an RRC initial state because the terminal device is disconnected from a network due to a radio link failure, thereby ensuring normal communication of the terminal device.

In a possible design, the processing module is further configured to request configuration information from the target cell, where the configuration information includes a downlink resource used by the terminal device to receive a beam failure recovery request response; and the communication module is further configured to receive the configuration information from the target cell. By requesting the configuration information from the target cell, the downlink resource used to receive the beam failure recovery request response may be indicated to the terminal device, so that the terminal device receives the beam failure recovery request response from the target cell on the downlink resource.

According to a seventh aspect, an embodiment of this application provides a communication apparatus, where the communication apparatus includes a communication interface and a processor, and the communication interface is used by the apparatus to communicate with another device, for example, to send and receive data or a signal. For example, the communication interface may be a transceiver, a circuit, a bus, a module, or another type of communication interface, and the another device may be a network device of a source cell or a target cell. The processor is configured to invoke a group of programs, instructions, or data, to perform the method described in the first aspect or the second aspect. The apparatus may further include a memory, and the memory is configured to store programs, instructions, or data invoked by the processor. The memory is coupled to the processor, and when executing the instructions or data stored in the memory, the processor may implement the method described in the first aspect or the second aspect.

According to an eighth aspect, an embodiment of this application provides a communication apparatus, where the communication apparatus includes a communication interface and a processor, and the communication interface is used by the apparatus to communicate with another device, for example, to send and receive data or a signal. For example, the communication interface may be a transceiver, a circuit, a bus, a module, or a communication interface of another type, and the another device may be a terminal device. The processor is configured to invoke a group of programs, instructions, or data, to perform the method described in the third aspect. The apparatus may further include a memory, and the memory is configured to store programs, instructions, or data invoked by the processor. The memory is coupled to the processor, and when executing the instructions or data stored in the memory, the processor may implement the method described in the third aspect.

According to a ninth aspect, an embodiment of this application further provides a computer readable storage medium, where the computer readable storage medium stores computer readable instructions, and when the computer readable instructions run on a computer, so that the method according to the first aspect or any one of the possible designs of the first aspect is performed; or the method according to the second aspect or any one of the possible designs of the second aspect is performed.

According to a tenth aspect, an embodiment of this application further provides a computer readable storage medium, including instructions. When the instructions are run on a computer, the computer is enabled to perform the method according to the third aspect or any one of the possible designs of the third aspect.

According to an eleventh aspect, an embodiment of this application provides a chip system. The chip system includes one or more processors, and the one or more processors are configured to execute a computer program or instructions in a memory, to implement the method in the first aspect or any one of the possible designs of the first aspect. The chip system may include a chip, or may include a chip and another discrete device.

Optionally, the chip system may include a memory, or the chip system is connected to the memory.

According to a twelfth aspect, an embodiment of this application provides a chip system. The chip system includes one or more processors, and the one or more processors are configured to execute a computer program or instructions, to implement the method in the second aspect or any one of the possible designs of the second aspect. The chip system may include a chip, or may include a chip and another discrete device.

Optionally, the chip system may include a memory, or the chip system is connected to the memory.

According to a thirteenth aspect, an embodiment of this application provides a chip system. The chip system includes one or more processors, and the one or more processors are configured to execute a computer program or instructions, to implement the method in the third aspect or any one of the possible designs of the third aspect. The chip system may include a chip, or may include a chip and another discrete device.

Optionally, the chip system may include a memory, or the chip system is connected to the memory.

According to a fourteenth aspect, an embodiment of this application provides a communication system. The communication system includes the communication apparatus according to the fourth aspect or the fifth aspect, a communication apparatus in a source cell, and a communication apparatus in a target cell.

In a possible design, the communication apparatus in the source cell includes the communication apparatus according to the sixth aspect or the communication apparatus according to the eighth aspect.

According to a fifteenth aspect, a computer program product including instructions is provided. When the computer program product runs on a computer, the method in the foregoing aspects and any one of the possible designs of the aspects is performed.

### BRIEF DESCRIPTION OF DRAWINGS

FIG. 1 is a schematic architectural diagram of a communication system according to an embodiment of this application;
FIG. 2 is a schematic diagram of beam switch from a source cell to a target cell according to an embodiment of this application;
FIG. 3 is a first schematic flowchart of a cell handover method according to an embodiment of this application;
FIG. 4 is a schematic structural diagram of a MAC-CE used to activate a TCI state according to an embodiment of this application;
FIG. 5 is a second schematic flowchart of a cell handover method according to an embodiment of this application;
FIG. 6 is a third schematic flowchart of a cell handover method according to an embodiment of this application;
FIG. 7 is a schematic flowchart of a beam switch failure according to an embodiment of this application;
FIG. 8 is a fourth schematic flowchart of a cell handover method according to an embodiment of this application;
FIG. 9 is a first schematic structural diagram of a communication apparatus according to an embodiment of this application; and
FIG. 10 is a second schematic structural diagram of a communication apparatus according to an embodiment of this application.

### DESCRIPTION OF EMBODIMENTS

Embodiments of this application provide a cell handover method and an apparatus. The method and the apparatus are based on a same technical concept or similar technical concepts. Because problem-resolving principles of the method and the apparatus are similar, mutual reference may be made to implementation of the apparatus and the method, and repeated parts are not described. In descriptions of embodiments of this application, words such as "first", "second", and "third" are merely used for distinguishing description, and cannot be understood as indicating or implying relative importance, and cannot be understood as indicating or implying a sequence.

The cell handover method provided in embodiments of this application may be applied to a 4th generation (4th generation, 4G) communication system, for example, long term evolution (long term evolution, LTE), or may be applied to a 5th generation (5th generation, 5G) communication system, for example, 5G new radio (new radio, NR), or applied to various future communication systems, for example, a 6th generation (6th generation, 6G) communication system.

The following describes embodiments of this application in detail with reference to the accompanying drawings.

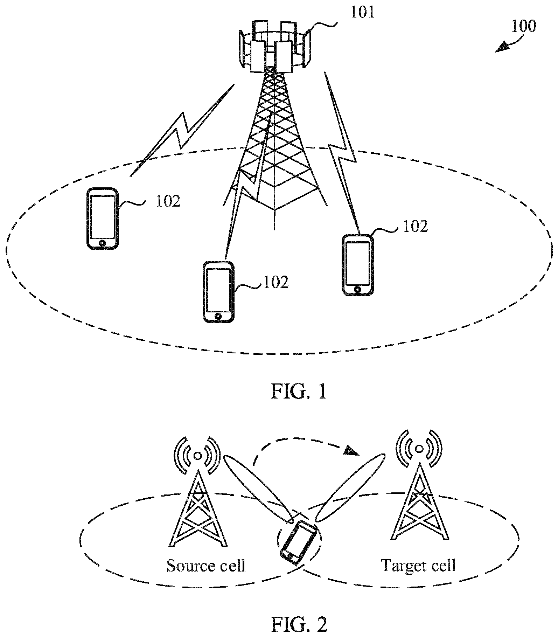

FIG. 1 shows an architecture of a possible communication system to which a cell handover method according to an embodiment of this application is applicable. Refer to FIG. 1, a communication system 100 includes: a network device 101 and a terminal device 102. The network device 101 provides a service for the terminal device 102 in a coverage area.

The network device 101 is a node in a radio access network (radio access network, RAN), and may also be referred to as a base station, or may be referred to as a RAN node (or a device). Examples of some network devices 101 are: a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), an HeNB (for example, home evolved NodeB, or home NodeB, HNB), a base band unit (base band unit, BBU), and a wireless fidelity (wireless fidelity, Wi-Fi) access point (access point, AP). The network device 101 may alternatively be a satellite, and the satellite may also be referred to as a high-altitude platform, a high-altitude aircraft, or a satellite base station. Alternatively, the network device 101 may be another device that has a network device function. For example, the network device 101 may be a device that functions as a network device in device-to-device (device-to-device, D2D) communication. Alternatively, the network device 101 may be a network device in a possible future communication system.

In some deployments, the network device may include a central unit (central unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, RF processing functions, and functions related to an active antenna. Because information at the RRC layer is finally changed into information at the PHY layer, or is changed from the information at the PHY layer, in this architecture, higher layer signaling such as RRC layer signaling may alternatively be considered to be sent by the DU, or to be sent by the DU+AAU. It may be understood that the network device may be a device including one or more of a CU node, a DU node, and an AAU node. In addition, the CU may be assigned to a network device in a radio access network (radio access network, RAN), or the CU may be assigned to a network device in a core network (core network, CN). This is not limited in this application.

The terminal device 102 is also be referred to as user equipment (user equipment, UE), a mobile station (mobile station, MS), a mobile terminal (mobile terminal, MT), or the like, and is a device that provides a user with voice and/or data connectivity. For example, the terminal device 102 includes a handheld device with a wireless connection function, a vehicle-mounted device, and the like. Currently, the terminal device 102 may be: a mobile phone (mobile phone), a tablet computer, a notebook computer, a handheld computer, a mobile internet device (mobile internet device, MID), a wearable device (for example, a smart watch, a smart band, a pedometer), a vehicle-mounted device (for example, a car, a bicycle, an electric car, an airplane, a ship, a train, or a high-speed train), a virtual reality (virtual reality, VR) device, an augmented reality (augmented reality, AR) device, a wireless terminal in industrial control (industrial control), a smart home device (for example, a refrigerator, a television set, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home), a flying device (for example, an intelligent robot, a hot air balloon, an uncrewed aerial vehicle, or an aircraft), or the like. Alternatively, the terminal device 102 may be another device that has a terminal device function. For example, the terminal device 102 may be a device that functions as a terminal device in D2D communication.

Based on the system architecture shown in FIG. 1, a solution provided in embodiments of this application relates to handover between cells of a terminal device, in other words, the terminal device is handed over from one cell to another cell. A cell from which the handover is performed may be referred to as a source serving cell or a source cell. A cell to which the handover is to be performed or is performed may be referred to as a target serving cell or a target cell. In embodiments of this application, the source cell and the target cell are used as an example for description. As shown in FIG. 2, a terminal device performs beam communication in a source cell. Due to mobility of the terminal device or another reason, the terminal device may be handed over to a target cell. After the handover, the terminal device performs the beam communication with the target cell. In embodiments of this application, the source cell and the target cell may be served by a same network device, or may be served by different network devices. That the terminal device performs beam communication with the source cell may be understood as that the terminal device performs wireless communication with a network device of the source cell through a beam. Similarly, that the terminal device performs beam communication with the target cell may be understood as that the terminal device performs wireless communication with a network device of the target cell through a beam.

A concept of a beam in embodiments of this application is first explained, to facilitate understanding by persons skilled in the art.

In an NR protocol, the beam may be represented by a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a TCI state (state). The beam may alternatively be indicated by using a spatial relation (spatial relation) parameter. Therefore, in this application, the beam may be replaced with the spatial domain filter, spatial filter, spatial domain parameter, spatial parameter, spatial domain setting, spatial setting, QCL information, QCL assumption, QCL indication, TCI state (including DL TCI state and/or UL TCI state), spatial relation (spatial relation), or the like. The above terms are also equivalent to each other. Alternatively, the beam may be replaced with another term for representing a beam. This is not limited in this application.

The beam may be a wide beam, a narrow beam, or another type of beam. A beam forming technology may be a beamforming technology or another technology. The beamforming technology may be specifically a digital beamforming technology, an analog beamforming technology, a hybrid digital/analog beamforming technology, or the like. Optionally, a plurality of beams having a same communication characteristic or similar communication characteristics are considered as one beam. One beam may be corresponding to one or more antenna ports, and is used to transmit a data channel, a control channel, a sounding signal, and the like. The one or more antenna ports forming (corresponding to) one beam may also be considered as one antenna port set or one antenna port group.

In embodiments of this application, cell handover is implemented through beam switch. The beam switch may be implemented through a layer 1 (layer 1, L1), that is, a physical layer (physical layer, PHY), or a layer 2 (layer 2, L2), that is, a media access control (medium access control, MAC) layer. In comparison with a control mechanism implemented through an L3, that is, an RRC protocol layer, a cell handover delay can be reduced.

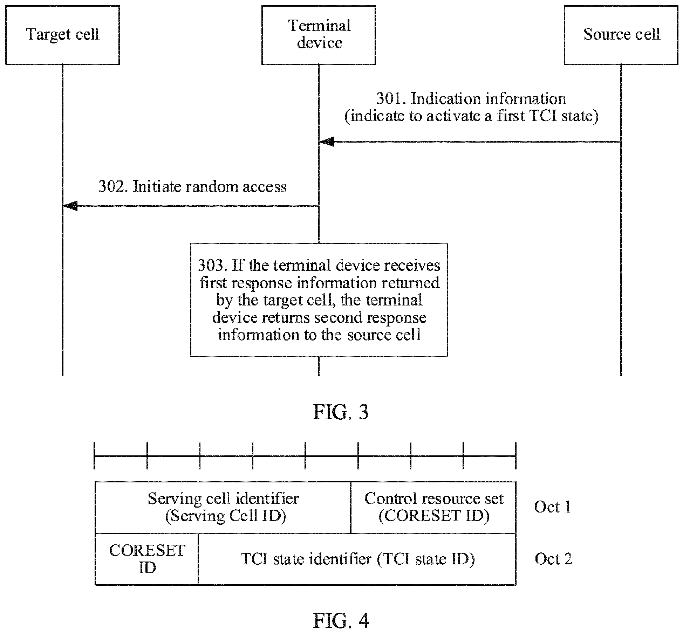

As shown in FIG. 3, the following describes in detail a specific procedure of a cell handover method according to an embodiment of this application.

S301. A source cell sends indication information to a terminal device. Correspondingly, the terminal device receives the indication information from the source cell.

The indication information indicates beam switch, or the indication information indicates to activate a first TCI state, or the indication information indicates any one of a spatial relation, a beam ID, a unified TCI, a UL-TCI, a common beam, QCL information, a QCL assumption, or a spatial filter. When the indication information indicates to activate the first TCI state, the indication information may include an identifier (TCI state ID) of the first TCI state.

S302. The terminal device initiates random access to a target cell according to the indication information.

S303. If the terminal device receives first response information returned by the target cell, the terminal device returns second response information to the source cell.

It should be noted that, in this embodiment of this application, response information may also be referred to as a response message. For example, the first response information may be referred to as a first response message, and the second response information may be referred to as a second response message.

The second response information is used to respond to the indication information received in S301. For example, in S301, the indication information indicates the beam switch, and the second response information may indicate that the beam switch succeeds. For another example, in S301, the indication information indicates to activate the first TCI state, and the second response information may indicate that the first TCI state is successfully activated. The second response information may be acknowledgement (acknowledge, ACK) information. It may alternatively be considered that the second response information indicates that: The terminal device successfully receives physical downlink control channel (physical downlink control channel, PDCCH) information based on a QCL relationship indicated by the first TCI. Alternatively, the second response information indicates that: The terminal device receives the PDCCH information based on the QCL relationship indicated by the first TCI, and successfully receives physical downlink shared channel (physical downlink shared channel, PDSCH) information based on scheduling of the PDCCH information.

The indication information may be L1 or L2 layer signaling. Generally, after receiving the indication information at the L1 or L2, the terminal device returns a response to the indication information at fixed time. If a conventional feedback mechanism is used, after receiving the response returned by the terminal device, the source cell considers that the beam switch of the terminal device succeeds. However, the beam switch of the terminal device may fail, in other words, the cell handover may fail. If beam switch-based cell handover of the terminal device fails, the terminal device has a radio link interruption, disconnects from a network and returns to an RRC initial state. It is clear that reliability of successful cell handover is insufficient. In this embodiment of this application, the terminal device returns the second response information to the source cell only after receiving the first response information returned by the target cell. An improved feedback mechanism can improve reliability of the terminal device during the beam switch-based cell handover.

The following further describes in detail an optional implementation of the cell handover method provided in this embodiment of this application.

Before the source cell sends the indication information to the terminal device in S301, the source cell may send a physical layer measurement configuration to the terminal device, and the terminal device receives the physical layer measurement configuration from the source cell. The physical layer measurement configuration includes reference signal information of a neighboring cell, for example, a downlink reference signal of the neighboring cell. The downlink reference signal may be a synchronization signal/physical broadcast channel block (synchronization signal/physical broadcast channel block, SS/PBCH block), and the SS/PBCH block may be referred to as a synchronization signal block (synchronization signal block, SSB) for short, a sounding reference signal (sounding reference signal, SRS), a demodulation reference signal (demodulation reference signal, DMRS), a channel state information reference signal (channel state information reference signal, CSI-RS), a cell specific reference signal (cell specific reference signal, CSI-RS), a tracking reference signal (tracking reference signal, TRS), or the like. The terminal device measures the downlink reference signal of the neighboring cell based on the physical layer measurement configuration. The terminal device reports a measurement result of the neighboring cell downlink reference signal to the source cell, and the source cell sends the indication information to the terminal device according to the measurement result. The indication information may include one or more of an identifier of the terminal device, an identifier of the neighboring cell, a bandwidth part (BWP) identifier, a carrier (component carrier, CC) identifier, an identifier of a random access resource, or an identifier of a target beam. The identifier of the target beam may be replaced with an identifier that can represent another parameter of the beam.

In S301, the source cell sends indication information to the terminal device. The indication information may be a beam switch indication, and indicates beam switch. The terminal device performs the cell handover according to the indication information of the source cell, to implement the beam switch-based cell handover. In this embodiment of this application, the beam indication may be implemented in the following manner.

In downlink transmission, a network device indicates a transmission configuration number (index) state TCI state to the terminal device. The TCI state is a parameter set and includes a plurality of parameters related to a downlink transmit beam (a transmit beam of the network device). Therefore, in this application, the beam and the TCI state may be considered to be equivalent, and may be replaced with each other. For example, in S301, indicating the beam switch by the indication information may also be considered as indicating to activate the TCI state (TCI state). The network device may be a network device of the source cell. The following uses the source cell as an example for description.

First, the source cell configures the TCI state for the terminal device, and the terminal device receives the TCI state from the source cell.

The source cell configures a plurality of TCI states for the terminal device by using RRC signaling. Each TCI state includes an index TCI stateld field and two QCL-Info fields. Each QCL-Info field may include a cell (cell) field, may further include a bwp-Id (bandwidth part (bandwidth part, BWP)) field, a referenceSignal (reference signal) field, and a qcl-Type field. The cell field indicates that the TCI state is applied to a cell indicated by the cell field. Different QCL-Info may be configured for different cells, and different QCL-Info may be configured for different BWPs of a cell. The bwp-Id field indicates a BWP that is indicated by the bwp-Id field and in which a reference signal in the TCI state is located. The referenceSignal field indicates that a channel or signal transmitted in the TCI state and a reference signal indicated by the referenceSignal field form a quasi-co-location (quasi-co-location, QCL) relationship. The channel transmitted in the TCI state is, for example, a PDSCH or a PDCCH. The QCL relationship refers to: When receiving the two reference signals, a terminal may assume some same receiving compensation and/or spatial filtering parameters. Alternatively, two reference signal resources may be replaced with two antenna ports, and the antenna ports are in a one-to-one correspondence with the reference signal resources. Which receiving parameters between the two reference signal resources are the same depends on a qcl-Type field in the QCL-Info. "A resource of the channel transmitted in the TCI state and a reference signal resource indicated by the referenceSignal field form a QCL relationship."

The qcl-Type field may have four values: typeA, typeB, typeC, and typeD. typeA indicates that the two reference signal resources have a same Doppler shift (that is, a frequency shift), a Doppler spread (that is, a frequency shift range), an average delay (that is, an average time shift), and a delay spread (that is, a time shift range). typeB indicates that the two reference signal resources have the same Doppler shift and Doppler spread. typeC indicates that the two reference signal resources have the same Doppler shift and average delay. typeD indicates that the terminal may assume that a same spatial receiving parameter is used to receive the two reference signal resources, which may also be understood as that the network device sends the two reference signals through two same transmit beams. In the two pieces of QCL-Info included in the TCI state configured by the source cell for the terminal device, a maximum of one can be of a typeD type. Alternatively, the TCI state configured by the network device may not include the QCL-info of the typeD type, and the TCI state that does not include the QCL-info of the typeD type is not used to indicate related information of the beam. Therefore, descriptions are not further provided herein.

In this embodiment of this application, the TCI state configured by the source cell for the terminal device may include a TCI state of the neighboring cell.

After the source cell configures the TCI state for the terminal device, when determining that the terminal device needs to perform the cell handover, the source cell sends signaling for activating the TCI state to the terminal device.

The PDCCH is used as an example. The TCI state for receiving the PDCCH may be indicated to be activated by using a medium access control-control element (medium access control-control element, MAC-CE). In an evolved version of a protocol, the TCI state may also support indication or activation using downlink control indication DCI signaling at the physical layer. The source cell sends the MAC-CE to the terminal device, where each MAC-CE can indicate only one TCI state identifier (TCI state ID) of one control resource set (control resource set, CORESET). The CORESET is a resource for the terminal device to receive the PDCCH. The terminal device may determine the target beam based on a value of the TCI state ID. A MAC-CE structure used to activate the TCI-state is shown in FIG. 4.

In S301, the indication information may be carried by using the MAC-CE, or may be carried by using downlink control information (downlink control information, DCI).

Alternatively, the source cell may indicate a TCI state by using a TCI field in the DCI. For example, the TCI field occupies three bits (bits), and may represent eight different field values (codepoint). Each field value of the TCI field corresponds to an index of a TCI state, and the TCI state index uniquely identifies a TCI state. A manner of indicating the TCI state by using the DCI may also be applicable to the PDSCH.

The target beam indicated by the indication information in S301 may be a transmit beam used by the terminal device to send a signal, or may be a receive beam used by the terminal device to receive a signal.

S302. The terminal device initiates random access to the target cell according to the indication information in S301. The terminal device may initiate the random access to the target cell based on a parameter indicated by the first TCI terminal. A random access resource used by the terminal device to initiate the random access to the target cell may be determined in the following manner: The terminal device receives the indication information in S301 to indicate to activate the first TCI state, where the first TCI state indicates one or more parameters, and the first TCI state indicates the first reference signal. There is an association relationship between the reference signal and the random access resource, the first reference signal is associated with a first random access resource, and the terminal device initiates the random access to the target cell based on the first random access resource associated with the first reference signal. The first random access resource may include a physical random access channel (physical random access channel, PRACH) time-frequency resource, and may further include a random access preamble (preamble). The PRACH time-frequency resource may be represented by a PRACH transmission occasion (RACH occasion, RO). One RO represents a time-frequency resource used to transmit a preamble, includes one or more subcarriers in frequency domain, and includes one or more time domain symbols in time domain. The terminal device sends the preamble to the target cell on the PRACH time-frequency resource associated with the first reference signal. One first reference signal may be corresponding to one or more PRACH time-frequency resources, and the first reference signal may be associated with some or all preambles on the corresponding PRACH time-frequency resources. The target cell learns of the association relationship between the reference signal and the random access resource. When receiving a random access request initiated by the terminal device based on the first random access resource, the target cell may determine a target beam that the terminal device wants to access. Therefore, the target cell may return the first response information to the terminal device by using the target beam.

A network side may configure the association relationship between the reference signal and the random access resource for the terminal device in advance. The association relationship may be that one reference signal is associated with one or more random access resources, or may be that a plurality of reference signals are associated with a plurality of random access resources. Alternatively, one or more reference signals may be associated with one random access resource. The reference signal for configuring the association relationship is the reference signal of the neighboring cell. The random access resource for configuring the association relationship is also a random access resource of the neighboring cell. The network side may be the network device of the source cell, and the source cell may obtain the association relationship from the target cell. Herein, the random access resource in the association relationship preconfigured by the network side may be a dedicated random access resource, that is, a contention-free (contention-free) random access resource. The network side may be a source cell, and the source cell may obtain the association relationship from the target cell, and configure the association relationship for the terminal device.

Alternatively, the source cell may receive a broadcast message or system information (system information), for example, SIB 1 information from the target cell, where the SIB1 information includes a configuration of a random access resource, and the source cell sends the configuration of the random access resource of the target cell to the terminal device. The terminal device determines the random access resource based on the configuration of the random access resource of the target cell, and initiates the random access to the target cell. If the first reference signal is an SSB, the terminal device may determine a corresponding random access resource based on an SSB index (index) according to a method defined in a protocol. If the first reference signal is a CSI-RS, the terminal device further needs to receive an association relationship that is between the CSI-RS and the SSB and that is sent by the network, determine, by using the association relationship between the CSI-RS and the SSB, an index of the SSB associated with the CSI-RS, and then determine the random access resource.

Alternatively, after receiving the indication information from the source cell, the terminal device may attempt to receive system information or a broadcast message in the target cell, obtain the configuration of the random access resource, and initiate the random access in the target cell. For example, the terminal device is not configured with the association relationship between the plurality of reference signals and the plurality of random access resources, and does not receive the system information of the target cell from the source cell. This manner may be used.

In S303, the terminal device considers that the random access succeeds only after receiving the first response information returned by the target cell. Before receiving the first response information returned by the target cell, the terminal device needs to retain a hybrid automatic repeat request (hybrid automatic repeat request, HARQ) process until the terminal device returns the second response information to the source cell.

If the terminal device does not receive the first response information returned by the target cell, or the terminal device does not receive, in an expected receiving time window, the first response information returned by the target cell, the terminal device may return negative acknowledgement (negative acknowledge, NACK) information to the source cell. The NACK information indicates a beam switch failure, or indicates an activation failure of the first TCI state. The terminal device may perform wireless communication with the source cell based on a beam before the beam switch. For example, the terminal device receives the PDCCH based on the QCL relationship indicated by the TCI state used to communicate with the source cell. For another example, the terminal device communicates with the source cell based on the TCI state used by the source cell to send the indication information. Before receiving the second response information returned by the terminal device, the source cell retains a connection configuration to the terminal device, for example, retains a context, a carrier, a BWP, and/or a parameter configuration of each channel of the terminal device, so that after the terminal device fails to perform the beam switch or the cell handover, a communication connection with the source cell can be quickly restored.

After receiving the second response information, the source cell deactivates the TCI state used by the terminal device to communicate with the source cell.

In a cell handover method based on beam switch, the terminal device implements cell handover in a beam switch process. If a beam failure occurs on the terminal device during the cell handover, the cell handover also fails. Based on this, an embodiment of this application further provides a cell handover method, to perform link recovery when a beam failure occurs during the cell handover.

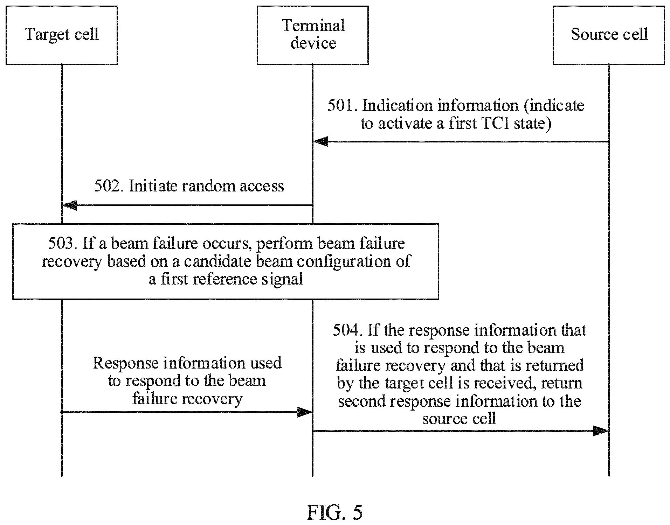

As shown in FIG. 5, a specific procedure of another cell handover method further provided in an embodiment of this application is described as follows. It may be understood that the embodiment in FIG. 5 and the embodiment in FIG. 3 are based on a same technical concept, and reference may be made to each other.

S501. A source cell sends indication information to a terminal device, and the terminal device receives the indication information from the source cell.

The indication information indicates to activate a first TCI state. This step is the same as S301, and reference may be made to the descriptions of S301.

S502. The terminal device initiates random access to a target cell according to the indication information.

This step is the same as S302, and reference may be made to the descriptions of S302.

S503. If a beam failure occurs, the terminal device performs beam failure recovery based on a candidate beam configuration of a first reference signal.

The first TCI state indicates the first reference signal.

S504. If the terminal device receives response information that is used to respond to the beam failure recovery and that is returned by the target cell, the terminal device returns second response information to the source cell, and the source cell receives the second response information from the terminal device.

The second response information indicates that the first TCI state is successfully activated. For the second response information, refer to the descriptions of the second response information in the embodiment in FIG. 3.

According to the embodiment in FIG. 5, when beam switch-based cell handover fails, the terminal device can quickly attempt the beam failure recovery in the target cell by using the candidate beam configuration, so that reliability of the terminal device during the beam switch-based cell handover can be improved.

After the beam failure, the terminal device sends a beam failure recovery request to the target cell. After determining the beam failure recovery, the target cell returns response information of the beam failure recovery request to the terminal device. The response information of the beam failure recovery request may also be referred to as a beam failure recovery request response. After the terminal device receives the beam failure recovery request response or after the terminal device successfully receives a PDCCH sent by the target cell for the first time, the terminal device considers that a target beam of a neighboring cell is successfully switched, or considers that a TCI state (namely, the first TCI state) of the neighboring cell is successfully activated. Before receiving the beam failure recovery request response returned by the target cell, the terminal device needs to retain a hybrid automatic repeat request (hybrid automatic repeat request, HARQ) process until the terminal device returns the second response information to the source cell.

If the terminal device does not receive beam failure recovery response information returned by the target cell, the terminal device may return NACK information to the source cell, where the NACK information indicates a beam switch failure, or indicates an activation failure of the first TCI state. The terminal device may perform wireless communication with the source cell based on a beam before the beam switch. For example, the terminal device receives the PDCCH based on a QCL relationship indicated by the TCI state used to communicate with the source cell. Before receiving the second response information returned by the terminal device, the source cell retains a connection configuration to the terminal device, for example, retains a context of the terminal device, so that after the terminal device fails to perform the beam switch or the cell handover, a communication connection with the source cell can be quickly restored. After receiving the second response information, the source cell deactivates the TCI state used by the terminal device to communicate with the source cell.

Optionally, after receiving a random access response returned by the target cell, the terminal device may return the second response information to the source cell, to indicate that the first TCI state is successfully activated, or indicate that the beam switch is successful. This implementation is the same as S303 in the embodiment in FIG. 3.

The following describes a possible implementation of the beam failure in S503.

After initiating the random access to the target cell according to the indication information, the terminal device accesses the target cell, and performs the wireless communication with the target cell by using the target beam. For example, the indication information indicates to activate the first TCI state, and the terminal device receives a first PDCCH based on the QCL relationship indicated by the first TCI state. The terminal device performs beam quality detection on the target beam, and when a beam failure determining condition is met, the beam failure occurs.

The candidate beam configuration is preconfigured by the source cell for the terminal device. Optionally, the source cell sends the candidate beam configuration to the terminal device, and the terminal device receives the candidate beam configuration from the source cell. The candidate beam configuration includes a candidate beam of the target beam, or the candidate beam configuration includes one or more reference signals related to the first reference signal. The first reference signal is corresponding to the target beam, and the one or more reference signals are in a one-to-one correspondence with the candidate beam.

The source cell may send a request message to the target cell, where the request message is used to request the candidate beam configuration. The target cell receives the request message from the source cell, and returns the candidate beam configuration to the source cell. If the source cell and the target cell are served by a same network device, the candidate beam configuration can be known without sending the request message. If the source cell and the target cell are not served by a same network device, a network device of the source cell may send the request message to a network device of the target cell through an Xn interface or an F1-AP interface protocol. The request message sent by the source cell to the target cell may be used to request the candidate beam of the target beam, or may be used to request a candidate beam of another beam. For example, the source cell requests candidate beams of a beam 1, beam 2, and beam 3 to the target cell according to a measurement result of the terminal device. The beam 1 corresponds to a reference signal 1, the beam 2 corresponds to a reference signal 2, and the beam 3 corresponds to a reference signal 3. In other words, the source cell requests a related reference signal of the reference signal 1, a related reference signal of the reference signal 2, and a related reference signal of the reference signal 3 from the target cell.

Optionally, the request message that may be sent by the source cell to the target cell may further include one or more of the following information: an identifier of the terminal device, configuration information of each physical channel of the terminal device, or a result of measuring a reference signal of the neighboring cell by the terminal device.

The target cell returns a response message of the request message to the source cell, and the source cell receives the response message from the target cell. The response message of the request message includes the foregoing candidate beam configuration. Optionally, the response message of the request message may further include one or more of the following information: an uplink resource associated with the candidate beam, an uplink resource separately associated with one or more reference signals, or a downlink resource used by the terminal device to receive the beam failure recovery request response. The uplink resource may be a dedicated uplink resource, and one candidate beam or one reference signal is associated with one dedicated uplink resource. Alternatively, the uplink resource may be a contention-free PRACH resource, or may be a scheduling request (scheduling request, SR) resource, or may be another PUCCH resource or another PUSCH resource. The downlink resource for receiving the beam failure recovery request response may be a PDCCH configuration for receiving the beam failure recovery request response.

The source cell sends the candidate beam configuration to the terminal device, and may further send, to the terminal device, one or more of the foregoing information included in the response message obtained from the target cell.

During the beam failure recovery in S503, the terminal device may perform the following operations. The terminal device measures one or more reference signals in the candidate beam configuration of the first reference signal; selects a second reference signal in the candidate beam configuration according to the measurement result; and sends the beam failure recovery request to the target cell based on an uplink resource associated with the second reference signal. The target cell returns the beam failure recovery request response to the terminal device, and the terminal device receives the beam failure recovery request response from the target cell based on the downlink resource that is indicated by the source cell and that is used to receive the beam failure recovery request response.

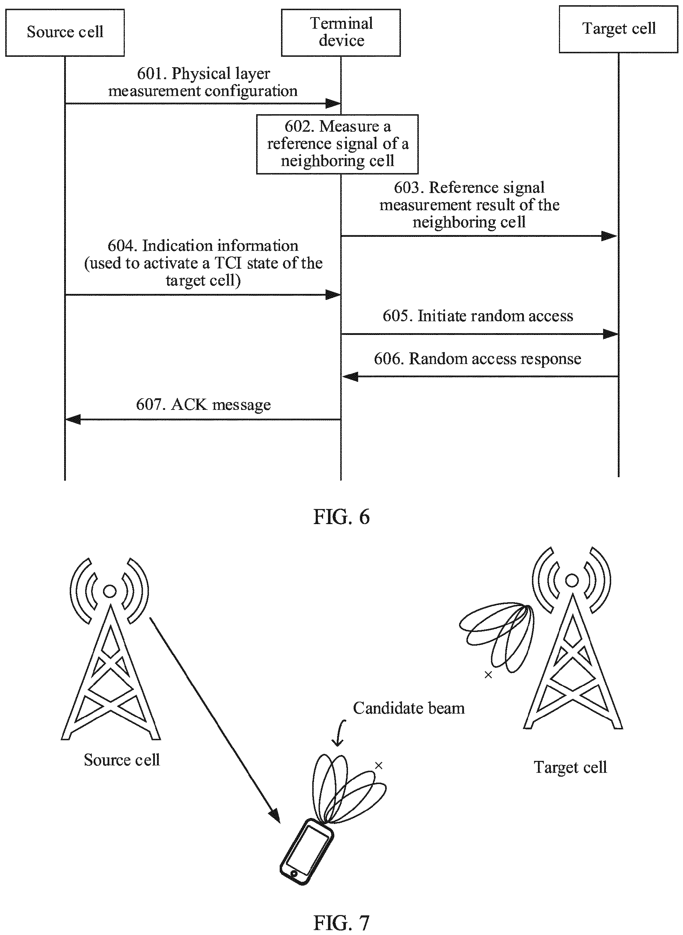

Based on the descriptions of the foregoing embodiment, as shown in FIG. 6, the following further describes a cell handover method provided in an embodiment of this application in detail with reference to a specific application scenario.

S601. A source cell sends a physical layer measurement configuration to a terminal device, and the terminal device receives the physical layer measurement configuration from the source cell. S602. The terminal device measures a reference signal of a neighboring cell based on the physical layer measurement configuration.

S603. The terminal device sends a reference signal measurement result of the neighboring cell to the source cell, and the source cell receives the reference signal measurement result of the neighboring cell from the terminal device.

S604. The source cell sends indication information to the terminal device. Correspondingly, the terminal device receives the indication information from the source cell.

The indication information may be beam switch indication information, or may indicate to activate a TCI state of a target cell.

The source cell determines, based on the received reference signal measurement result of the neighboring cell, that the terminal device needs to perform cell handover. The source cell may select a target cell for handover for the terminal device, and indicate, by using the indication information, the terminal device to activate the TCI state or indicate the target cell for handover.

The indication information may be carried by using a MAC-CE, or may be carried by using physical layer signaling.

S605. After receiving the indication information, the terminal device initiates random access to the target cell.

The terminal device may initiate the random access to the target cell based on a parameter indicated by the TCI state, which is indicated to be activated by the indication information. For example, the terminal device initiates the random access to the target cell based on a QCL relationship indicated by the TCI state.

S606. The target cell returns a random access response to the terminal device. Correspondingly, the terminal device receives the random access response from the target cell.

Optionally, the target cell may alternatively return one piece of DCI to the terminal device. Correspondingly, the terminal device receives the DCI from the target cell. The DCI is used to respond to the random access in S605.

S607. After receiving the random access response, the terminal device returns an ACK message to the source cell. Correspondingly, the source cell receives the ACK message from the terminal device.

The ACK message is used to respond to the indication information in S604, to indicate that the TCI activation succeeds or beam switch succeeds.

The ACK message may be carried in the MAC-CE.

Before receiving the random access response of the target cell, the terminal device keeps communicating with the source cell. If the beam switch fails, in other words, the cell handover fails, for example, the random access response from the target cell is not received, the terminal device performs wireless communication with the source cell, to ensure that a radio link is not interrupted.

Before receiving the ACK message, the source cell keeps a TCI used to communicate with the terminal from being deactivated. After receiving the ACK message, the source cell deactivates the TCI used to communicate with the terminal. In this way, when the terminal fails to be handed over, a connection to the terminal device can be restored in time, so that normal communication of the terminal device can be ensured.

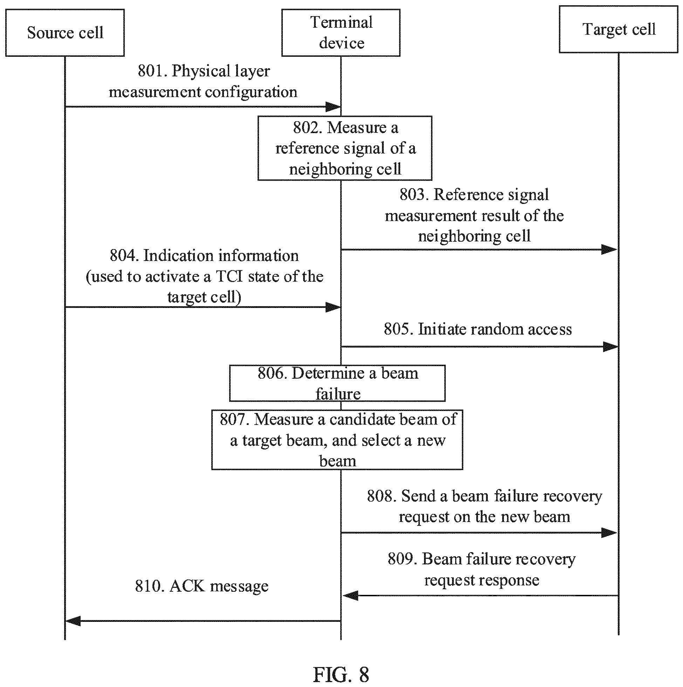

In a possible embodiment, after a terminal is handed over to a target cell, a beam failure may occur. As shown in FIG. 7, a terminal device receives L1/L2 indication information from a source cell, where the indication information indicates to activate a TCI state of the target cell. The terminal device initiates random access to the target cell, and establishes a connection to the target cell by using a target beam, but the beam failure occurs. In this case, a cell handover method provided in this embodiment of this application may also be shown in FIG. 8.

S801. The source cell sends a physical layer measurement configuration to the terminal device, and the terminal device receives the physical layer measurement configuration from the source cell.

S802. The terminal device measures a reference signal of a neighboring cell based on the physical layer measurement configuration.

S803. The terminal device sends a reference signal measurement result of the neighboring cell to the source cell, and the source cell receives the reference signal measurement result of the neighboring cell from the terminal device.

S804. The source cell sends indication information to the terminal device. Correspondingly, the terminal device receives the indication information from the source cell.

The indication information may be beam switch indication information, or may indicate to activate the TCI state of the target cell.

The source cell determines, based on the received reference signal measurement result of the neighboring cell, that the terminal device needs to perform cell handover. The source cell may select a target cell for handover for the terminal device, and indicate, by using the indication information, the terminal device to activate the TCI state or indicate the target cell for handover.

The indication information may be carried by using a MAC-CE, or may be carried by using physical layer signaling.

S805. After receiving the indication information, the terminal device initiates random access to the target cell.

The terminal device may initiate the random access to the target cell based on a parameter indicated by the TCI state, which is indicated to be activated by the indication information. For example, the terminal device initiates the random access to the target cell based on a QCL relationship indicated by the TCI state.

S806. The terminal device determines a beam failure.

The terminal device may measure a target beam to be switched. When a condition is met, the terminal device determines that the beam failure occurs.

S807. The terminal device measures a candidate beam of the target beam based on preconfigured information, and selects a new beam according to a measurement result.

S808. The terminal device sends a beam failure recovery request to the target cell on an uplink resource associated with the new beam.

S809. The terminal device receives, on a downlink resource, a beam failure recovery request response from the target cell based on the preconfigured information.

One or more types of information about the candidate beam of the target beam, the uplink resource, or the downlink resource may be obtained from the preconfigured information. The preconfigured information may be sent by a network side to the terminal device in advance, and the network side may be, for example, the source cell. The source cell can obtain the information from the target cell.

S810. The terminal device returns an ACK message to the source cell. Correspondingly, the source cell receives the ACK message from the terminal device.

The ACK message is used to respond to the indication information in S804, to indicate that the TCI activation succeeds or beam switch succeeds.

The ACK message may be carried in the MAC-CE.

It should be noted that, examples in application scenarios in this application merely show some possible implementations, and are intended to better understand and describe the methods in this application. Persons skilled in the art may obtain examples of some evolved forms according to the reference signal indication method provided in this application.

In embodiments provided in this application, the methods provided in embodiments of this application are separately described from perspectives of the network device, the terminal device, and interaction between the network device and the terminal device. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on a specific application and a design constraint of the technical solutions.

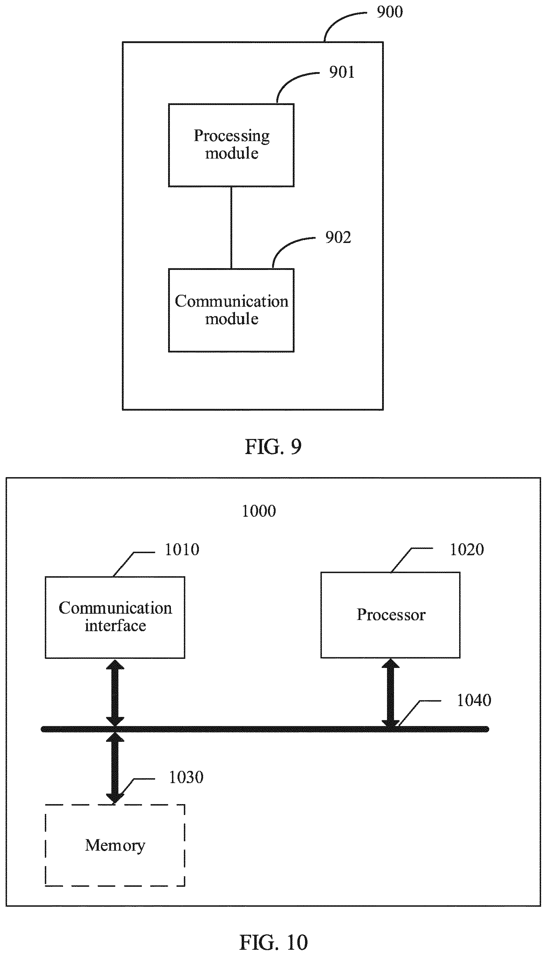

As shown in FIG. 9, based on a same technical concept, an embodiment of this application further provides a communication apparatus 900. The communication apparatus 900 may be a terminal device or a network device of a source cell, or may be an apparatus in the terminal device or in the network device of the source cell, or an apparatus that can be used in matching with the terminal device or the network device of the source cell. In a design, the communication apparatus 900 may include modules in one-to-one correspondence with execution of methods/operations/steps/actions performed by the terminal device or the network device in the foregoing method embodiments. The module may be a hardware circuit, or may be software, or may be implemented by a combination of the hardware circuit and the software. In a design, the apparatus may include a processing module 901 and a communication module 902. The processing module 901 is configured to invoke the communication module 902 to perform a receiving and/or sending function. Further, the communication module 902 may also be referred to as a transceiver module, and may include a receiving module and a sending module. The receiving module is configured to perform a receiving operation in the method embodiments, and the sending module is configured to perform a sending operation in the method embodiments. In this embodiment of this application, that the processing module performs a sending or receiving operation by using the communication module may be understood as follows: The processing module delivers instructions to the communication module, and the communication module performs the sending or receiving operation, or the processing module indicates the communication module to perform the sending or receiving operation.

When the apparatus is configured to perform the method performed by the terminal device, in an embodiment, the communication module 902 is configured to receive indication information from a source cell, where the indication information indicates to activate a first TCI state; and the processing module 901 is configured to initiate random access to a target cell according to the indication information, and is configured to: if it is determined that the communication module receives first response information returned by the target cell, return second response information to the source cell by using the communication module 902, where the second response information indicates that the first TCI state is successfully activated.

Optionally, the first response information includes response information used to respond to the random access. For example, the first response information may be a random access response, or other information that may be used to respond to the random access. The terminal device considers that the random access succeeds only after receiving the response information that is used to respond to the random access that is returned by the target cell, and may further return the second response information to the source cell. The source cell considers that beam switch succeeds or considers that activation of the first TCI succeeds only after receiving the second response information. In this way, cell handover reliability can be improved.

In another embodiment, the communication module 902 is configured to receive indication information from a source cell, where the indication information indicates to activate a first TCI state; and the processing module 901 is configured to: initiate random access to a target cell according to the indication information, and if a beam failure occurs, perform beam failure recovery based on a candidate beam configuration of a first reference signal. The first TCI state indicates the first reference signal.

Based on the two embodiments, some optional implementations are provided.

Optionally, the first TCI state indicates the first reference signal; and when initiating the random access to the target cell according to the indication information, the processing module 901 is specifically configured to initiate the random access to the target cell based on a first random access resource associated with the first reference signal.

Optionally, a plurality of reference signals of the target cell are associated with a plurality of random access resources, and the first reference signal is one of the plurality of reference signals.

The source cell may configure the association relationship between the reference signal and the random access resource for the terminal device in advance, and the processing module 901 is further configured to obtain the association relationship from the source cell. The association relationship may be obtained by the source cell by using a received system message of the target cell. The processing module 901 is configured to: determine the random access resource based on a configuration of the random access resource of the target cell, and initiate the random access to the target cell. Alternatively, after receiving the indication information from the source cell by using the communication module 902, the processing module 901 may attempt to receive system information or a broadcast message in the target cell, obtain the configuration of the random access resource, and initiate the random access in the target cell.

Optionally, the first TCI state indicates the first reference signal, and the processing module 901 is further configured to: after initiating the random access to the target cell, if a beam failure occurs, perform beam failure recovery based on a candidate beam configuration of the first reference signal.

In a possible design, the first response information includes response information used to respond to the beam failure recovery. For example, the first response information may be a beam failure request response, or other information that may be used to respond to the beam failure recovery. After the terminal device performs the beam switch-based cell handover, a beam switch failure may occur. After receiving the response information used to respond to the beam failure recovery, the terminal device returns, to the source cell, the second response message that indicates that activation of the first TCI state succeeds, cell handover succeeds, or beam switch succeeds. In this way, reliability and robustness of successful cell handover can be further ensured.

Optionally, when performing the beam failure recovery based on the candidate beam configuration of the first reference signal, the processing module 901 is specifically configured to: measure one or more reference signals in the candidate beam configuration of the first reference signal; select a second reference signal in the candidate beam configuration according to a measurement result; and send a beam failure recovery request to the target cell based on the uplink resource associated with the second reference signal.

Optionally, the communication module 902 is further configured to receive configuration information from the source cell, where the configuration information includes a downlink resource used to receive the beam failure recovery request response. The processing module 901 is further configured to receive the beam failure recovery request response from the target cell based on the downlink resource.

In a possible design, the processing module 901 is further configured to: if the first response information returned by the target cell is not received, communicate with the source cell based on a second TCI state used before the first TCI state is successfully activated. For example, a PDCCH from the source cell may be received based on a QCL relationship indicated by the second TCI state.

The communication module 902 is further configured to perform another receiving or sending step or operation performed by the terminal device in the foregoing method embodiments. The processing module 901 may be further configured to perform another corresponding step or operation performed by the terminal device in the foregoing method embodiments other than the sending and receiving. Details are not described herein again.

When the apparatus is configured to perform the method performed by the network device, the processing module 901 is configured to send, by using the communication module 902, indication information to the terminal device based on a quasi-colocation QCL relationship indicated by the first TCI state, where the indication information indicates to activate the second TCI state, and the indication information is used by the terminal device to initiate random access to the target cell; and the communication module 902 is further configured to receive an acknowledgement from the terminal device, where the acknowledgement indicates that the second TCI state is successfully activated.

Generally, the acknowledgement may be sent by using physical layer signaling, or may be sent by using MAC layer signaling. A delay of the physical layer and the MAC layer is lower than that of a layer 3, that is, an RRC layer. Therefore, the delay of a cell handover can be reduced.

In a possible design, the processing module 901 is configured to: if a negative acknowledgement is received from the terminal device, communicate with the terminal device by using the QCL relationship indicated by the first TCI state.

The communication module 902 is further configured to perform another receiving or sending step or operation performed by the source cell in the foregoing method embodiments. The processing module 901 may be further configured to perform another corresponding step or operation performed by the source cell in the foregoing method embodiments other than the sending and receiving. Details are not described herein again.

Division into modules in this embodiment of this application is an example, is merely logical function division, and may be other division in an actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software function module.

FIG. 10 shows a communication apparatus 1000 according to an embodiment of this application. The communication apparatus 1000 is configured to implement a function of the terminal device or the network device in the foregoing methods. When implementing a function of a source cell, the communication apparatus may be a network device of the source cell, or may be an apparatus in the network device of the source cell, or may be an apparatus that can be used in matching with the network device of the source cell. When a function of a terminal device is implemented, the communication apparatus may be a terminal device, or may be an apparatus in the terminal device, or may be an apparatus that can be used in matching with the terminal device. The communication apparatus may be a chip system. In this embodiment of this application, the chip system may include a chip, or may include a chip and another discrete component. The communication apparatus 1000 includes at least one processor 1020, configured to implement the function of the terminal device or the network device of the source cell in the methods provided in embodiments of this application. The communication apparatus 1000 may further include a communication interface 1010. In this embodiment of this application, the communication interface may be a transceiver, a circuit, a bus, a module, or a communication interface of another type, and is configured to communicate with another device through a transmission medium. A transceiver may include a receiver and a transmitter. The receiver is configured to implement a receiving operation in the method embodiments, and the transmitter is configured to implement a sending operation in the method embodiments. Other operations are performed by the processor. When the communication apparatus is the chip system, the communication interface 1010 may include an input interface and an output interface. The input interface correspondingly performs a receiving operation, and the output interface correspondingly performs a sending operation.

For example, the communication interface 1010 is used by an apparatus in the communication apparatus 1000 to communicate with another device. For example, when the communication apparatus 1000 is a network device, the another device may be a terminal device. When the communication apparatus 1000 is a terminal device, the another apparatus may be a network device. The processor 1020 receives and sends data through the communication interface 1010, and is configured to implement the methods in the foregoing method embodiments. For example, when a function of the terminal device is implemented, in an embodiment, the communication interface 1010 is configured to receive indication information from the source cell, where the indication information indicates to activate the first TCI state. The processor 1020 is configured to initiate random access to the target cell according to the indication information, and is configured to: if first response information returned by the target cell is received, return second response information to the source cell through the communication interface 1010, where the second response information indicates that the first TCI state is successfully activated. Optionally, the first response information includes response information used to respond to the random access. For example, the first response information may be a random access response, or other information that may be used to respond to the random access. The terminal device considers that the random access succeeds only after receiving the response information that is used to respond to the random access that is returned by the target cell, and may further return the second response information to the source cell. The source cell considers that beam switch succeeds or considers that activation of the first TCI succeeds only after receiving the second response information. In this way, cell handover reliability can be improved. In another embodiment, the communication interface 1010 is configured to receive indication information from the source cell, where the indication information indicates to activate the first TCI state, and the processor 1020 is configured to: initiate random access to the target cell according to the indication information, and if a beam failure occurs, perform beam failure recovery based on a candidate beam configuration of a first reference signal, where the first TCI state indicates the first reference signal. Based on the two embodiments, some optional implementations are provided.

Optionally, the first TCI state indicates the first reference signal; and when initiating random access to the target cell according to the indication information, the processor 1020 is specifically configured to initiate the random access to the target cell based on a first random access resource associated with the first reference signal.

Optionally, a plurality of reference signals of the target cell are associated with a plurality of random access resources, and the first reference signal is one of the plurality of reference signals.

The source cell may configure the association relationship between the reference signal and the random access resource for the terminal device in advance, and the processor 1020 is further configured to obtain the association relationship from the source cell. The association relationship may be obtained by the source cell by using a received system message of the target cell. The processor 1020 is configured to determine the random access resource based on a configuration of the random access resource of the target cell, and initiate the random access to the target cell. Alternatively, after receiving the indication information from the source cell through the communication interface 1010, the processor 1020 may attempt to receive system information or a broadcast message in the target cell, obtain a configuration of the random access resource, and initiate the random access in the target cell.

Optionally, the first TCI state indicates the first reference signal, and the processor 1020 is further configured to: after initiating the random access to the target cell, if a beam failure occurs, perform beam failure recovery based on a candidate beam configuration of the first reference signal.

In a possible design, the first response information includes response information used to respond to the beam failure recovery. For example, the first response information may be a beam failure recovery request response, or other information used to respond to the beam failure recovery. After the terminal device performs the beam switch-based cell handover, a beam switch failure may occur. After receiving the response information used to respond to the beam failure recovery, the terminal device returns, to the source cell, the second response message that indicates that activation of the first TCI state succeeds, cell handover succeeds, or beam switch succeeds. In this way, reliability and robustness of successful cell handover can be further ensured.

Optionally, when performing the beam failure recovery based on the candidate beam configuration of the first reference signal, the processor 1020 is specifically configured to: measure one or more reference signals in the candidate beam configuration of the first reference signal; select a second reference signal in the candidate beam configuration according to a measurement result; and send a beam failure recovery request to the target cell based on the uplink resource associated with the second reference signal.

Optionally, the communication interface 1010 is further configured to receive configuration information from the source cell, where the configuration information includes a downlink resource used to receive the beam failure recovery request response. The processor 1020 is further configured to receive the beam failure recovery request response from the target cell based on the downlink resource.

In a possible design, the processor 1020 is further configured to: if the first response information returned by the target cell is not received, communicate with the source cell based on a second TCI state used before the first TCI state is successfully activated. For example, a PDCCH from the source cell may be received based on a QCL relationship indicated by the second TCI state.

The communication interface 1010 is further configured to perform another receiving or sending step or operation performed by the terminal device in the foregoing method embodiments. The processor 1020 may be further configured to perform another corresponding step or operation performed by the terminal device in the foregoing method embodiments other than the sending and receiving. Details are not described herein again.

When the apparatus is configured to perform the method performed by the network device, the processor 1020 is configured to send indication information to the terminal device based on the quasi-colocation QCL relationship indicated by the first TCI state through the communication interface 1010, where the indication information indicates to activate the second TCI state, and the indication information is used by the terminal device to initiate random access to the target cell; and the communication interface 1010 is further configured to receive an acknowledgement from the terminal device, where the acknowledgement indicates that the second TCI state is successfully activated.

Generally, the acknowledgement may be sent by using physical layer signaling, or may be sent by using MAC layer signaling. A delay of the physical layer and the MAC layer is lower than that of a layer 3, that is, an RRC layer. Therefore, the delay of a cell handover can be reduced.

In a possible design, the processor 1020 is configured to: if a negative acknowledgement is received from the terminal device, communicate with the terminal device by using the QCL relationship indicated by the first TCI state.

The communication interface 1010 is further configured to perform another receiving or sending step or operation performed by the source cell in the foregoing method embodiments. The processor 1020 may be further configured to perform another corresponding step or operation performed by the source cell in the foregoing method embodiments other than the sending and receiving. Details are not described herein again.

The communication apparatus 1000 may further include at least one memory 1030, configured to store program instructions and/or data. The memory 1030 is coupled to the processor 1020. The coupling in this embodiment of this application may be indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. At least one of the at least one memory may be included in the processor.

A specific connection medium between the communication interface 1010, the processor 1020, and the memory 1030 is not limited in this embodiment of this application. In this embodiment of this application, the memory 1030, the processor 1020, and the communication interface 1010 are connected through a bus 1040 in FIG. 10. The bus is represented by using a bold line in FIG. 10. A connection manner between other components is merely an example for description, and does not impose a limitation. The bus may be classified into an address bus, a data bus, a control bus, and the like. For ease of representation, only one bold line is used to represent the bus in FIG. 10, but this does not mean that there is only one bus or only one type of bus.

When the communication apparatus 900 and the communication apparatus 1000 are specifically a chip or a chip system, the communication module 902 and the communication interface 1010 may output or receive a baseband signal. When the communication apparatus 900 and the communication apparatus 1000 are specifically devices, the communication module 902 and the communication interface 1010 may output or receive a radio frequency signal. In this embodiment of this application, the processor may be a general-purpose processor, a digital signal processor, an application-specific integrated circuit, a field programmable gate array or another programmable logic device, a discrete gate or transistor logic device, or a discrete hardware component. The processor can implement or perform the methods, steps, and logical block diagrams disclosed in embodiments of this application. The general-purpose processor may be a microprocessor, any conventional processor, or the like. The steps of the methods disclosed with reference to embodiments of this application may be directly performed and completed by a hardware processor, or may be performed and completed by using a combination of hardware and software module in the processor.

In this embodiment of this application, the memory 1030 may be a non-volatile memory such as a hard disk drive (hard disk drive, HDD) or a solid-state drive (solid-state drive, SSD), or may be a volatile memory (volatile memory) such as a random access memory (random access memory, RAM). The memory is any other medium that can be used to carry or store expected program code in a form of instructions or a data structure and that can be accessed by a computer, but is not limited thereto. Alternatively, the memory in this embodiment of this application may be a circuit or any other apparatus that can implement a storage function, and is configured to store the program instructions and/or data.

Some or all of operations and functions performed by the terminal described in the foregoing method embodiments of this application, or some or all of operations and functions performed by the network device may be completed by using a chip or an integrated circuit.

To implement functions of the communication apparatus in FIG. 9 or FIG. 10, an embodiment of this application further provides a chip, including one or more processors, configured to support the communication apparatus in implementing functions related to the terminal or the source cell in the foregoing method embodiments. In a possible design, the chip is connected to the memory, or the chip includes the memory. The memory is configured to store program instructions and data that are necessary for the communication apparatus.

An embodiment of this application provides a computer readable storage medium. The computer readable storage medium stores a computer program. The computer program includes instructions used to perform the foregoing method embodiments.

An embodiment of this application provides a computer program product that includes instructions. When the computer program product runs on a computer, the foregoing method embodiments are implemented. Persons skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of another programmable data processing device generate an apparatus for implementing a specific function in one or more processes in the flowcharts and/or in one or more blocks in the block diagrams.

These computer program instructions may alternatively be stored in a computer-readable memory that can lead the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn of the basic inventive concept. Therefore, the following claims are intended to be construed as to cover the preferred embodiments and all changes and modifications falling within the scope of this application.

It is clear that persons skilled in the art can make various modifications and variations to embodiments of this application without departing from the spirit and scope of embodiments of this application. In this way, this application is intended to cover these modifications and variations of embodiments of this application provided that they fall within the scope of protection defined by the following claims of this application and their equivalent technologies.

## Claims

1. A cell handover method, comprising:
receiving indication information from a source cell, wherein the indication information indicates to activate a first transmission configuration indicator TCI state;
initiating random access to a target cell according to the indication information; and
if first response information returned by the target cell is received, returning second response information to the source cell, wherein the second response information indicates that the first TCI state is successfully activated.

2. The method according to claim 1, wherein the first TCI state indicates a first reference signal; and
the initiating random access to a target cell according to the indication information comprises:
initiating the random access to the target cell based on a first random access resource associated with the first reference signal.

3. The method according to claim 2, wherein a plurality of reference signals of the target cell are associated with a plurality of random access resources, and the first reference signal is one of the plurality of reference signals.

4. The method according to any one of claims 1 to 3, wherein the first response information comprises response information used to respond to the random access.

5. The method according to any one of claims 1 to 3, wherein the first TCI state indicates the first reference signal, and the method further comprises:
after the random access is initiated to the target cell, if a beam failure occurs, performing beam failure recovery based on a candidate beam configuration of the first reference signal.

6. The method according to claim 5, wherein the first response information comprises response information used to respond to the beam failure recovery.

7. The method according to claim 5 or 6, wherein the performing beam failure recovery based on a candidate beam configuration of the first reference signal comprises:
measuring one or more reference signals in the candidate beam configuration of the first reference signal;
selecting a second reference signal in the candidate beam configuration according to a measurement result; and
sending a beam failure recovery request to the target cell based on an uplink resource associated with the second reference signal.

8. The method according to claim 7, wherein the method further comprises:
receiving configuration information from the source cell, wherein the configuration information comprises a downlink resource used to receive a beam failure recovery request response; and
receiving the beam failure recovery request response from the target cell based on the downlink resource.

9. The method according to any one of claims 1 to 8, wherein the method further comprises:
if the first response information returned by the target cell is not received, communicating with the source cell based on a second TCI state used before the first TCI state is successfully activated.

10. A communication apparatus, comprising:
a communication module, configured to receive indication information from a source cell, wherein the indication information indicates to activate a first transmission configuration indicator TCI state; and
a processing module, configured to: initiate random access to a target cell according to the indication information; and if it is determined that the communication module receives first response information returned by the target cell, return second response information to the source cell by using the communication module, wherein the second response information indicates that the first TCI state is successfully activated.

11. The apparatus according to claim 10, wherein the first TCI state indicates a first reference signal; and
when initiating the random access to the target cell according to the indication information, the processing module is configured to initiate, by using the communication module, the random access to the target cell based on a first random access resource associated with the first reference signal.

12. The apparatus according to claim 11, wherein a plurality of reference signals of the target cell are associated with a plurality of random access resources, and the first reference signal is one of the plurality of reference signals.

13. The apparatus according to any one of claims 10 to 12, wherein the first response information comprises response information used to respond to the random access.

14. The apparatus according to any one of claims 10 to 12, wherein the first TCI state indicates the first reference signal, and the communication module is further configured to: after initiating the random access to the target cell, the processing module is further configured to: if a beam failure occurs, perform beam failure recovery based on a candidate beam configuration of the first reference signal.

15. The apparatus according to claim 14, wherein when performing the beam failure recovery based on the candidate beam configuration of the first reference signal, the processing module is configured to: measure one or more reference signals in the candidate beam configuration of the first reference signal; select a second reference signal in the candidate beam configuration according to a measurement result; and send, by using the communication module, a beam failure recovery request to the target cell based on an uplink resource associated with the second reference signal.

16. The apparatus according to claim 15, wherein the communication module is further configured to receive configuration information from the source cell, wherein the configuration information comprises a downlink resource used to receive a beam failure recovery request response; and
the processing module is further configured to receive the beam failure recovery request response from the target cell by using the communication module based on the downlink resource.

17. The apparatus according to any one of claims 14 to 16, wherein the first response information comprises response information used to respond to the beam failure recovery.

18. The apparatus according to any one of claims 10 to 17, wherein the processing module is further configured to:
if the first response information returned by the target cell is not received, communicate with the source cell based on a QCL relationship indicated by a second TCI state used before the first TCI state is successfully activated.

19. A communication apparatus, comprising a processor and a communication interface, wherein the communication interface is configured to communicate with another communication apparatus, and the processor is configured to execute a computer program or instructions, so that the method according to any one of claims 1 to 9 is implemented.

20. A computer readable storage medium, wherein the computer storage medium stores computer readable instructions, and when the computer readable instructions are run on a communication apparatus, the method according to any one of claims 1 to 9 is performed.

21. A chip, wherein the chip comprises one or more processors, and the one or more processors are configured to execute a computer program or instructions, so that the method according to any one of claims 1 to 9 is implemented.

22. A cell handover method, applied to a source cell, and comprising:
sending indication information to a terminal device based on a quasi-colocation QCL relationship indicated by a first transmission configuration indicator TCI state, wherein the indication information indicates to activate a second TCI state, and the indication information is used by the terminal device to initiate random access to a target cell; and
receiving an acknowledgement from the terminal device, wherein the acknowledgement indicates that the second TCI state is successfully activated.

23. The method according to claim 22, wherein the method further comprises:
if a negative acknowledgement is received from the terminal device, communicating with the terminal device by using the QCL relationship indicated by the first TCI state.

24. The method according to claim 22 or 23, wherein the method further comprises:
requesting configuration information from the target cell, wherein the configuration information comprises a downlink resource used by the terminal device to receive a beam failure recovery request response; and
receiving the configuration information from the target cell.

25. A communication apparatus, used in a source cell, and comprising a communication module and a processing module, wherein
the processing module is configured to send, by using the communication module, indication information to a terminal device based on a quasi-colocation QCL relationship indicated by a first transmission configuration indicator TCI state, wherein the indication information indicates to activate a second TCI state, and the indication information is used by the terminal device to initiate random access to a target cell; and
the communication module is further configured to receive an acknowledgement from the terminal device, wherein the acknowledgement indicates that the second TCI state is successfully activated.

26. The apparatus according to claim 25, wherein the processing module is further configured to:
if a negative acknowledgement is received from the terminal device by using the communication module, communicate with the terminal device by using the QCL relationship indicated by the first TCI state.

27. The apparatus according to claim 25 or 26, wherein the processing module is further configured to:
request configuration information from the target cell, wherein the configuration information comprises a downlink resource used by the terminal device to receive a beam failure recovery request response; and
receive the configuration information from the target cell by using the communication module.

28. A communication apparatus, comprising a processor and a communication interface, wherein the communication interface is configured to communicate with another communication apparatus, and the processor is configured to execute a computer program or instructions, so that the method according to any one of claims 22 to 24 is implemented.

29. A computer readable storage medium, wherein the computer storage medium stores computer readable instructions, and when the computer readable instructions are run on a communication apparatus, the method according to any one of claims 22 to 24 is performed.

30. A chip, wherein the chip comprises one or more processors, and the one or more processors are configured to execute a computer program or instructions, so that the method according to any one of claims 22 to 24 is implemented.

31. A communication system, comprising a communication apparatus of a source cell, a communication apparatus of a target cell, and the communication apparatus according to any one of claims 10 to 18 or the communication apparatus according to claim 19.
